# EUROPÄISCHE PATENTSCHRIFT

(11) **EP 1 669 226 B1**
(45) Veröffentlichungstag und Bekanntmachung des Hinweises auf die Patenterteilung: **10.02.2010**
(21) Anmeldenummer: 05111778.6
(22) Anmeldetag: 07.12.2005
(51) Int. Cl.: B60H 1/00

(54) **Modellbasiertes Verfahren zur Regelung einer Kfz-Klimaanlage**
Model based method for controlling a vehicle air conditioning system.
Procédé de commande d'un climatiseur d'un véhicule comprenant des moyens de modélisation.

(30) Priorität: 07.12.2004 DE 102004059073
(43) Veröffentlichungstag der Anmeldung: 14.06.2006
(73) Patentinhaber: Behr-Hella Thermocontrol GmbH, 70469 Stuttgart (DE)
(72) Erfinder: Frigge, Michael, 33102 Paderborn (DE); Trapp, Ralph, 33102 Paderborn (DE)
(74) Vertreter: Hilleringmann, Jochen

(56) Entgegenhaltungen:
- EP-A- 0 495 201
- EP-A- 1 452 356
- FR-A- 2 824 788
- US-A1- 2003 146 290
- US-A1- 2004 025 522

## Beschreibung

### Stand der Technik:

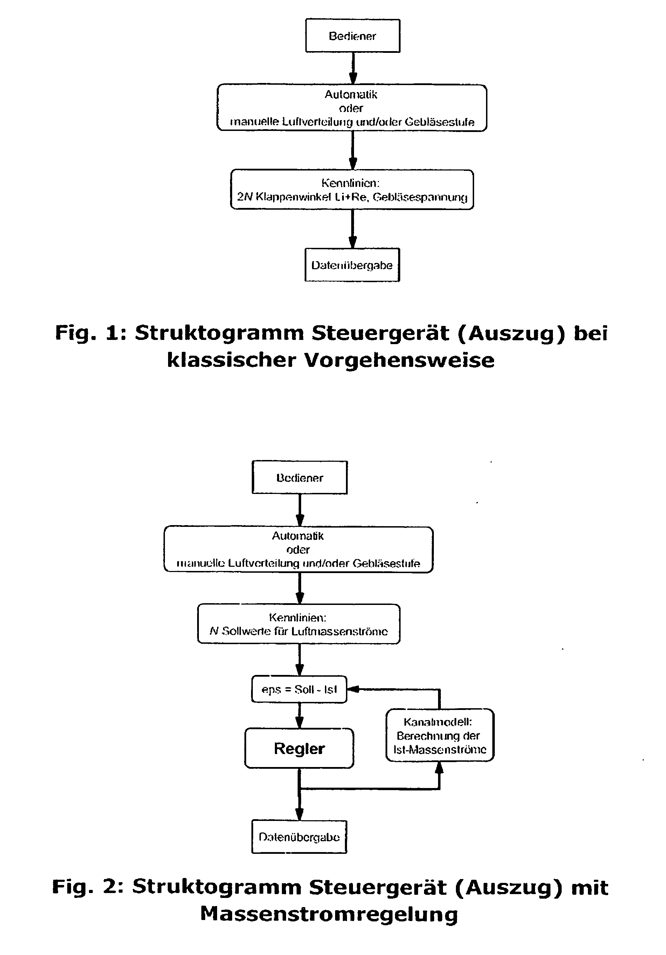

Bei der Fahrzeugklimatisierung wird die Verteilung der Luft auf die einzelnen Auslassöffnungen über Absperrklappen (Aktuatoren) in den Kanälen der Anlage sowie das Gebläse gesteuert. Die Abstimmung bestimmter Luftmassenstromverteilungen erfolgt dabei klassisch über die Vorgabe der Klappenwinkel und der Gebläsespannung (Fig. 1). Dabei hat die Änderung eines bestimmten Klappenwinkels eine Rückwirkung auf die Massenströme der übrigen Auslässe der Anlage zur Folge. Die Abstimmung der Anlage ist damit je nach Anzahl der Klappen und Auslässe entsprechend aufwändig, zusätzlich werden Störeinflüsse (Rückwirkungen auf die übrigen Auslässe) wie das Verfahren von Mischluftklappen oder das manuelle Absperren einzelner Auslassdüsen bisher völlig ignoriert oder nur unvollständig kompensiert.

In DE-A-101 47 585 wird gemäß dem Oberbegriff des Anspruchs 1 eine Einrichtung zur Luftmengenregelung in einem Fahrzeug vorgeschlagen, wobei das Berechnungsverfahren nicht spezifiziert wird.

US-A-2004/025522 beschreibt die Bildung eines Luftmengenstroms in einem Auslass einer Fahrzeugklimaanlage durch das Zusammenführen (Mischen) zweier temperierter Einzel-Luftmassenströme. D.h. es werden (je Region) ein drosselbarer Kaltluftmassenstrom und ein drosselbarer Warmluftmassenstrom zusammengeführt. Die weitere Aufteilung der Massenströme innerhalb einer Region der Fahrgastzelle in zwei oder mehr Teilregionen unter Beibehaltung von vorgebbaren Luftmassen der einzelnen in die Region eintretenden Luftströme der Teilregionen wird nicht beschrieben.

EP-A-1 452 356 bezieht sich speziell auf eine Zwei-Zonen-Klimaanlage, wobei bei einer gewählten Gebläsegeschwindigkeit auf die Ausblastemperatur Einfluss genommen wird.

Weiterhin wird der Einfluss einer Temperaturmischklappe auf den Luftmassenstrom steuernd berücksichtigt, wobei eine Regelung des austretenden Luftmassenstromes mit dem Ziel, diese konstant zu halten, nicht erwähnt ist.

US-A-2003/146290 beschreibt generell eine Methode der modellbasierten Entwicklung einer Steuergerätesoftware unter Verwendung eines Fahrzeugmodells, von Komfortmodellen von Codegeneratoren und des Steuergerätes innerhalb einer geschlossenen Schleife. Es werden die Struktur der berechnenden Software (CCSM) sowie ein Teil der Simulationsmodelle (VPM) beschrieben. Der Anwendungszwecks besteht hier in der Auslegung der Steuergerätesoftware bzw. der Regelkreise mit dem Ziel der Optimierung des thermischen Komforts.

Gemäß FR-A-2 824 788 wird ein hydraulisches und thermisches Modell der Fahrzeugkabine (steuernd) benutzt, um Vorgaben des Entwurfs der Klimaanlage zu erfüllen.

Gemäß den Ausführungen in EP-A-0 495 201 wird die Gesamtluftmenge der Fahrzeugklimaanlage geregelt. Für diese Regelung wird ein Differenzdruck gemessen. Es wird ein klassischer PI-Regelalgorithmus auf der Basis der gemessenen Druckdifferenz beschrieben. Bei "stehendem" Gebläsemotor (als Folge eines hohen Differenzdrucks) wird eine zentrale Absperrklappe (Staudruckklappe) "angedrosselt". Dabei kann es allerdings dazu kommen, dass sich die Verteilung der Luft auf die einzelnen Auslässe ändert.

### Neuerung, Merkmale und Vorteile der Erfindung:

Mit der Erfindung wird eine Klimaanlage für ein Fahrzeug, insbesondere Kraftfahrzeug, vorgeschlagen, die versehen ist mit
- einem Luftvertellungssystem, das einen Lufteinlass, ein Gebläse, eine Temperiervorrichtung, Luftverteilklappen und mehrere verschließbare Luftauslässe aufweist, und
- einer Regeleinrichtung für eine eingestellte Innenraumtemperatur,
- wobei die Regeleinrichtung eine auf Basis eines mathematischen Modells des Luftverteilungssystems erfolgende Regelung (nachfolgend auch mit modellbasierter Regelung bezeichnet) für die Verteilung von Luftmassenströmen auf die einzelnen Luftauslässe entsprechend für die einzelnen Luftauslässe vorgebbarer Sollwerte aufweist.

Vorteilhafterweise ist ein fahrzeuggeschwindigkeitsabhängiger, über den Lufteinlass auf das Luftkanalverteilungssystem wirkender Staudruck ermittelbar. In Abhängigkeit von der Größe des Staudrucks ist eine an das Gebläse anlegbare Betriebsspannung mit größer werdenden Staudruckwerten bis zu einem festlegbaren Minimalwert verringerbar.

Erfindungsgemäß sind nach Überschreiten eines Maximalstaudruckwerts die Luftverteilklappen und/oder die Luftauslässe derart schließbar, dass die vorgegebenen Sollwerte für die aus den Luftauslässen austretenden Luftmassenströme beibehaltbar sind.

Ferner wird zur Lösung der obigen Aufgabe mit der Erfindung ein Verfahren zur Einstellung der aus den Luftauslässen eines Luftkanalverteilungssystems ausströmenden Luftmassenströme in einer Fahrzeug-, insbesondere Kraftfahrzeug-Klimaanlage durch Regelung auf Basis eines mathematischen Modells des Luftverteilungssystems vorgeschlagen.

Vorteilhafterweise erfolgt die Regelung auf Basis eines mathematischen Modells des Luftverteilungssystems und unter Berücksichtigung eines fahrzeuggeschwindigkeitsabhängigen, über den Lufteinlass auf das Luftkanalverteilungssystem wirkenden Staudrucks.

Das Neue an dem Verfahren ist die Regelung der einzelnen Luftmassenströme auf der Basis eines Anlagenmodells (sog. "Kanalmodell"), wobei erstmals das vollständige Anlagenmodell als Bestandteil der Steuergerätesoftware im Steuergerät selbst berechnet wird (Fig. 2). Dieses Verfahren ermöglicht eine vollständige Luftmassenstromregelung ohne den Einsatz von Sensorik und bietet damit weitereichende Vorteile sowohl bei der Abstimmung des Fahrzeugs (Erprobungsfahrten im Entwicklungsstadium) sowie bei der Einstellung von Luftmassenströmen durch den Endkunden (Komfortsteigerung Für die Fahrzeuginsassen).

### Vorteile und Merkmale des Verfahrens:

- Bei hoher Güte des Anlagenmodells ist die nahezu rückwirkungsfreie Verstellung der Luftmassenströme einzelner oder mehrerer Auslassdüsen (soweit Klappen als Aktuatoren vorhanden) möglich.
- Es ist eine individuelle, für Fahrer und Beifahrer getrennte Einstellung der Luftverteilung mit nur einem Gebläse möglich (Komfortsteigerung).
- Das Gebläse wird automatisch auf ein energie- und geräuschoptimales Niveau geregelt.
- Störende Einflüsse auf die Anlage wie eine Verstellung von Mischluftklappen oder das manuelle Verschließen eines oder mehrerer Mannanströmer bleibt ohne Rückwirkung auf die eingestellte Luftverteilung.
- Eine Erhöhung der Luftmenge insgesamt durch den Eintrag von Stauluft bei höheren Fahrgeschwindigkeiten lässt sich sehr einfach kompensieren, wodurch auf eine Stauluftklappe verzichtet werden kann.
- Einfachere Abstimmung des Fahrzeugs durch die Vorgabe gewünschter Luftmassenströme möglich (in den Grenzen der Realisierbarkeit mit der betreffenden Anlage).
- Einfache Übertragbarkeit des vorgestellten Verfahrens der Massenstromregelung auf andere Fahrzeuge (Voraussetzung: Anlagenmodell).
- Die Soll-Luftmassenströme eines abgestimmten Fahrzeugs können als Referenzabstimmung bzw. Benchmark auch für andere Fahrzeuge herangezogen werden.

Ein weiterer Vorteil der Verwendung des Anlagenmodells als Regelstrecke liegt in der sehr viel besseren Regelbarkeit des Modells gegenüber der "echten" Strecke. Diese besitzt üblicherweise Verzögerungen (Motoren, Sensoren) und Totzeiten (Buskommunikation, Klappenreaktionszeit). Dagegen werden durch die modellbasierte Regelung die Klappen-Sollwerte im Steuergerät schneller berechnet als dies beim Einsatz von Sensoren der Fall wäre. Eine echte Regelung erfordert den Einsatz kostenintensiver Sensorik (Messung des Luftmassenstromes an jeder Auslassdüse, deren Luftmassenstrom geregelt werden soll).

### Beschreibung der Erfindung:

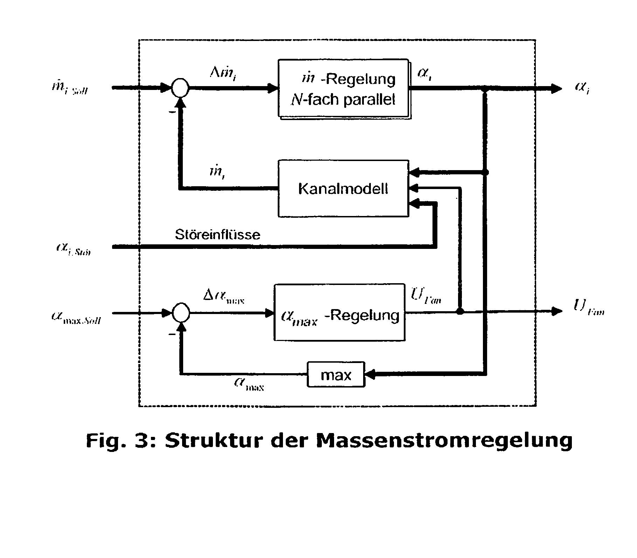

Die Grundlage für die Regelung stellt ein vollständiges mathematisches Modell (Anlagenmodell bzw. Kanalmodell) der Luftverteil-Anlage dar (Ansaugtrakt, Gebläse, Wärmetauscher, Mischkammer Klappen, Kanäle). Auf dieses Modell wird die nachfolgend beschriebene Regelstrategie angewandt, Fig. 3 gibt die Struktur des Verfahrens der modellbasierten Regelung wieder.

Die *N* Regelgrößen *ṁᵢ* mit *i* = 1...*N* (Massenströme derjenigen Auslasskanäle, die über eine Klappe als Aktuator gesteuert werden können) werden parallel mit je einem eigenen Regler versehen. Die Stellgrößen dieser Regler sind die zugehörigen Klappenwinkel *αᵢ*. Das Gebläse wird durch einen übergeordneten Regler so geregelt, dass die am weitesten geöffnete Klappe einen vorgegeben Wert α*_{max,Soll}* (Führungsgröße) annimmt (α*ₘₐₓ* -Regler). Die Stellgröße dieses Reglers ist die Gebläsespannung *U_{Fan}*. Wird der prozentuale Wert für *α_{max,Soll}* mit 100% vorgegeben, so erfolgt dadurch automatisch eine Energie- und Geräuschoptimierung, da die am weitesten geöffnete Klappe ganz (100%) geöffnet ist und das Gebläse somit nur so weit angesteuert wird, um den Soll-Luftmassenstrom in dem Kanal mit der 100% geöffneten Klappe zu erreichen.

Als Störeinflüsse sind die Klappenwinkel *α_{i,Stör}* der Mischluftklappe(n) sowie ggf. vorhandener manuell verschließbarer Absperrklappen (in der Regel bei den sog. Mannanströmern) anzusehen. Bei einer Änderung einer oder mehrerer dieser Größen wird der Einfluss auf die Luftverteilung kompensiert, so dass keine Veränderung der vorgegebenen Luftmassenstromverteilung eintritt.

Zur Kompensation der Erhöhung der Luftmenge durch Stauluft wird dem Modell der (messbare) geschwindigkeitsabhängige Staudruck aufgeschaltet. Als Reaktion reduziert der Gebläseregelkreis des vorgestellten Verfahrens automatisch die Gebläsespannung bis zu einer festgelegten minimalen Gebläsespannung. Bei einem weiteren Anstieg des Staudruckes werden dann die Klappen automatisch durch die einzelnen Massenstromregler derart gleichmäßig angedrosselt, dass die vorgegebenen Sollwerte der einzelnen Auslässe beibehalten werden.

Um eine gutmütige (begrenzungsfreie) Regelung zu ermöglichen, wird in Bezug auf das Anlagenmodell für die prozentualen Klappenwinkel (0...100%) ein "virtueller Bereich" oberhalb der maximalen Öffnung von 100% definiert und zugelassen.

Bestandteil der Erfindung ist das hier nicht näher spezifizierte Kanalmodell. Es gibt das physikalische Verhalten der Anlagenkomponenten Ansaugtrakt, Gebläse, Gebläseansteuerung, Lüfterrad, Verdampfer, Heizkörper, Mischluftklappen, Mischluftkammer, Luftaustrittsklappen und Luftkanäle in Bezug auf die Luftmassenströme wieder. Es berücksichtigt dabei neben den Strömungswiderständen der einzelnen Luftführungsbereiche auch Quereinflüsse zwischen Klappen und Luftströmungen. Bei diesem mathematischen Modell handelt es sich daher in der Regel um ein stark verkoppeltes, nichtlineares Mehrgrößensystem. Die Parametrierung des Kanalmodells lässt sich auf der Basis von Messwerten durch ein nichtlineares Optimierungsverfahren mit relativ geringem Aufwand automatisiert durchführen.

Das vorgestellte Verfahren der modellbasierten Luftmassenstromregelung lässt sich auf solche Fahrzeug-Klimaanlagen anwenden, welche mindestens zwei Aoslasskanäle besitzen, die jeweils mit einer steuerbaren Drosselklappe versehen sind. Es eignet sich aber insbesondere für sehr viel komplexere Anlagen mit zahlreichen Auslasskanälen (ggf. auf mehrere Zonen verteilt), die über eine entsprechende Aktuatorik (Drosselklappen) verfügen.

Die Erfindung wird nachfolgend anhand eines weiteren Ausführungsbeispiels nochmals näher erläutert.

Bei der Abstimmung von Fahrzeugklimaanlagen werden üblicherweise die Klappenwinkel der einzelnen Luftauslässe vorgegeben, die Änderung eines Klappenwinkels führt dabei oft zu unerwünschten Rückwirkungen an den übrigen Auslässen. Im Gegensatz dazu können durch eine modellbasierte Luftmengenregelung die interessierenden Luftmassenströme einzelner Auslassdüsen unabhängig voneinander vorgegeben werden. Somit lassen sich beliebige (auch links-rechts-getrennte) Luftverteilungen nahezu rückwirkungsfrei einstellen, Störeinflüsse werden automatisch kompensiert. Diese sich neu eröffnenden Möglichkeiten tragen zur subjektiven Steigerung des Klimakomforts sowie einer einfacheren Abstimmung der Anlage bei.

Bei der Fahrzeugklimatisierung spielt die Abstimmung der aus den verschiedenen Auslassdüsen ausströmenden Luftmengen eine entscheidende Rolle für das Wohlbefinden von Fahrer und Beifahrer. Einerseits können über erhöhte Luftmengen Aufheiz- bzw. Abkühlvorgänge beschleunigt werden, andererseits ist man bestrebt, Zuglufterscheinungen möglichst zu vermeiden. Jeder Fahrzeuginsasse soll darüber hinaus in der Lage sein, einen individuell gewünschten Komfortlevel zu wählen.

Zwei- oder Mehrzonen-Klimaanlagen gehören mittlerweile schon fast zur Standardausstattung von Fahrzeugen der Mittel- und Oberklasse, wobei die Wunschtemperatur jeder Zone separat gewählt werden kann. Die Möglichkeit, auch unterschiedliche Luftmengen und Luftverteilungen einstellen zu können, ist dagegen selten vorhanden und zumeist den Oberklasse-Fahrzeugen vorbehalten.

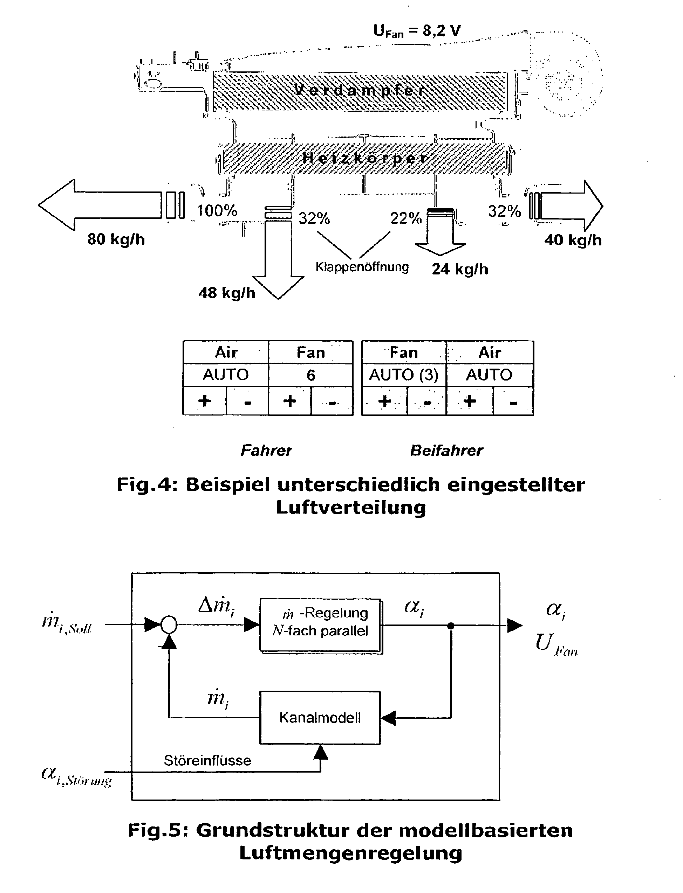

Wenn beispielsweise die Luftmenge auf der Fahrerseite erhöht werden soll, muss die Gebläsespannung angehoben werden, um den insgesamt höheren Luftdurchsatz umzusetzen. Gleichzeitig müssen aber die Klappen der Beifahrerseite in dem Maße angedrosselt werden, dass die hier ausgeblasene Luftmenge konstant bleibt (Rückwirkungsfreiheit). Fig. 4 zeigt beispielhaft eine solche Schieflast mit den zugehörigen Luftmassenströmen, Klappenöffnungen und dem Gebläse.

Schieflasten können durch die Einstellung verschiedener Gebläsestufen auf Fahrer- *und* Beifahrerseite auftreten. Real existiert jedoch nur *ein* Gebläse, so dass es sich dabei um *virtuelle* Gebläsestufen handelt. Diese Stufen werden nicht auf Gebläsespannungen, sondern auf Luftmengenniveaus abgebildet.

Grundsätzlich muss ein Klimaaggregat eine gewisse Mindestausstattung an Aktuatoren besitzen: Idealerweise kann jeder Auslass, dessen Luftmenge geregelt werden soll, mit einer eigenen Absperrklappe verschlossen werden. Zur Erzeugung beliebiger Luftmengen ist weiterhin ein stufenloses Automatikgebläse erforderlich.

Um eine gewünschte Verteilung der Luftmassenströme einstellen zu können, bedarf es eines Algorithmus, der aufgrund der vorgegebenen Massenstrom-Sollwerte die resultierenden Klappenpositionen und die erforderliche Gebläsespannung errechnet. Zur Realisierung gibt es prinzipiell verschiedene Möglichkeiten:
- Kennfeldbasierte Steuerung
- Klassische Regelung (Sensoren erforderlich)
- Steuerung durch modellbasierte Regelung
- Selbstkalibrierende modellbasierte Regelung

Eine reine *Steuerung* der Luftmassenströme erfolgt häufig auf der Basis von Kennfeldern. Bei Anlagen mit mehreren Auslässen kann eine zufrieden stellende Genauigkeit praktisch nur für wenige bestimmte Luftverteilungen erreicht werden, bei beliebigen Schieflasten der Luftmenge oder der Luftverteilung kommt es dagegen zu unvermeidbaren Rückwirkungen und Ungenauigkeiten.

Die klassische *Regelung* der Luftmassenströme erfordert zur Erfassung der IstWerte luftmengenmessende Sensoren (z.B. Anemometer) in einer Anzahl, diegleich der Anzahl der zu regelnden Auslässe ist. Gegen deren Einsatz sprechen neben möglichen konstruktiven Einschränkungen vor allem die zusätzlichen Kosten durch Sensorik, Verkabelung und zusätzlich erforderliche Hardwarekomponenten.

Auf der Grundlage eines adäquaten *Modells* der Anlage lassen sich die Sensorwerte auch *berechnen*, so dass auf den Einsatz kostenintensiver Sensorik ganz verzichtet werden kann. Voraussetzung für diesen Ansatz ist ein mathematisches Modell von hinreichender Güte und Genauigkeit, auf dessen Basis ein Regelalgorithmus vorgegebene Sollwerte und Störeinflüsse ausregeln kann (Fig. 5).

Wird zusätzlich an geeigneter Stelle ein einzelner Sensor platziert, so kann sich das Modell ständig selbst kalibrieren (Teilregelung). Insbesondere der Störeinfluss der Stauluft bei höheren Fahrzeuggeschwindigkeiten lässt sich so optimal kompensieren.

Voraussetzung für den zweckmäßigen Entwurf einer Steuerung ist die eingehende Kenntnis des fluidischen Anlagenverhaltens in Form eines Rechenmodells.

Eine Möglichkeit wäre die Abbildung der Anlagengeometrie (aus CAD-Datensätzen extrahierbar) auf ein dreidimensionales Strömungsmodell (CFD). Die Vorteile sind eine hohe Modellgüte und die Berechenbarkeit umfangreicher Ergebnisdaten, dem gegenüber steht allerdings der sehr hohe Modellier- und Rechenaufwand, den eine CFD-Simulation mit sich bringt.

Besser ist der Ansatz eines mathematischen Modells mit konzentrierten Parametern. Die einzelnen Klappenwinkel und das Gebläse stellen die Eingangsgrößen dar, Ausgangsgrößen dieses Mehrgrößensystems sind die Luftmassenströme an den verschiedenen Auslassdüsen des Klimaaggregates. Aufgrund der Komplexität des Anlagenverhaltens kann ein solches Modell nur durch Auswertung geeigneter Messwerte erstellt werden.

Bei luftseitig temperaturgeregelten Klimaanlagen haben die Mischluftklappen einen nicht unerheblichen Störeinfluss auf den Luftmassenstrom der einzelnen Auslässe. Auf Grund der unterschiedlichen Luftführung zwischen Warm- und Kaltstellung der Mischluftklappe variiert der fluidische Widerstand dieses Anlagenteils. Zusätzlich sind die Mischkammern derart kompakt ausgelegt, dass durch die Stellung der Mischluftklappe eine Vorzugsrichtung des Mischluftstromes entsteht (gewünschter Effekt: Temperaturschichtung). Aber auch die Absperrklappen selbst können benachbarte Luftkanäle beeinflussen, so dass üblicherweise eine starke Kopplung zwischen den physikalischen Größen dieses Mehrgrößensystems vorliegt.

Manuell verschließbare Absperrklappen stellen weitere Störgrößen dar: Ziel einer Luftmengenregelung ist das Erreichen und Halten der Sollwerte an jedem Auslass. Durch einen einseitig verschlossenen Luftauslass wird die Luft bei konstantem Gebläseniveau in benachbarte Kanäle gedrückt, so dass hier die Luftmengen ansteigen. Auf diesen Störeinfluss kann die modellbasierte Luftmengenregelung jedoch nur dann reagieren, wenn die Position der manuellen Absperrklappen dem Modell bekannt ist (Sensorik erforderlich).

Der Benutzer einer Klimaanlage (Fahrer, Beifahrer, Mitfahrer) profitiert von den neu eröffneten Möglichkeiten, neben der Temperatur je nach Anlagenausfuhrung auch unterschiedliche Luftmengen und Luftverteilungen auf Fahrer-/Beifahrerseite getrennt und nahezu rückwirkungsfrei einstellen zu können (persönliche Klimastile, Komfortlevel). Auf unangenehme, direkte Sonneneinstrahlung kann durch eine Einzelplatz-Solarkompensation individuell reagiert werden. Bei Erkennung der Sitzplatzbelegung lässt sich zusätzlich eine optimierte Energieverteilung realisieren, was sich für den Benutzer durch hohen Komfort und einen geräuschoptimalen Betrieb des Gebläses bemerkbar macht. Einzig die akustische Rückmeldung - eben das Geräusch des Gebläses - mag zuweilen ungewohnt erscheinen, wenn z.B. durch manuelles Verschließen einer Absperrklappe das Gebläse abgesenkt wird, obgleich die Luftmenge der übrigen Auslässe konstant bleibt.

Durch die Abstimmung von Luftmengen als eindeutige physikalische Größen (im Gegensatz zu Klappenwinkeln) kann der Fahrzeughersteller eine einheitliche Klima-Philosophie über alle Baureihen festlegen (Klimastile). Dieser Vorteil wird durch die abstrakte Sichtweise des Gesamtsystems "Klimaanlage mit Luftverteilsystem" erst ermöglicht.

Der Fahrzeughersteller erhält eine reproduzierbare Klimaapplikation. Diese lässt sich auf gleiche Fahrzeuge mit unterschiedlichen Klimageräten (auch verschiedener Hersteller bzw. Ausstattung), Nachfolgemodelle und sogar auf Fahrzeuge mit ähnlichem Kabinenaufbau übertragen.

Unter bestimmten Voraussetzungen kann durch geschickte Kompensation innerhalb des Modells auf eine Absperrklappe verzichtet werden (*N* regelbare Luftmengen bei *N*-1 verbauten Absperrklappen). Der Anstieg der gesamten Luftmenge aufgrund der Fahrtgeschwindigkeit (Stauluft) lässt sich ebenfalls über Klappen und Gebläse kompensieren, so dass die sonst übliche Staudruckklappe entfallen kann. All diese Maßnahmen führen zu einer merklichen Kostenreduzierung der Anlage.

Ferner liefert das Modul der Luftmengensteuerung durch das integrierte Modell der Anlage interessante physikalische Zwischengrößen wie die gesamte Luftmenge, Druckverluste etc., welche erfahrungsgemäß als Schnittstellen zu anderen Softwaremodulen neue Möglichkeiten schaffen.

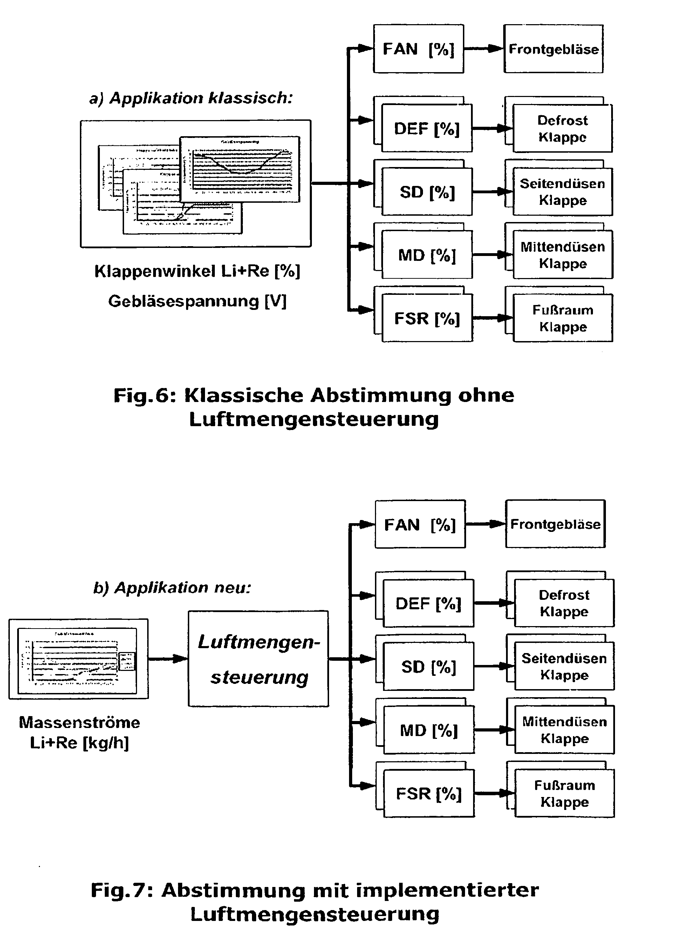

Für die Applikation der Klimaregelung eröffnet der Einsatz der Luftmengenregelung neue Möglichkeiten und eine einfachere Abstimmung, erfordert allerdings auch ein gewisses Umdenken. Üblicherweise werden die verschiedenen Klappenwinkel in Kennfeldern (getrennt für links und rechts aufgrund möglicher Anlagenunsymmetrien) zusammen mit einer Kennlinie für das Gebläse abgelegt (Fig. 7). Bei Verwendung der Luftmengensteuerung muss dagegen nur noch *ein* Kennfeld für die gewünschten Luftmassenströme appliziert werden, eine Gebläsekennlinie sowie die Links-/Rechts-Unterscheidung sind nicht erforderlich.

Die Unsymmetrien der Anlage, der Einfluss der Mischluftklappen, Quereinflüsse der Klappen untereinander sowie der Staulufteinfluss werden automatisch kompensiert. Durch die Vorgabe einzelner Massenströme je Düse lässt sich das Klimaempfinden erheblich leichter Abstimmen als durch die rückwirkungsbehaftete Einstellung von Klappenwinkeln.

Das Konzept der modellbasierten Luftmengensteuerung lässt sich z.B. sehr gut mit der grafischen Beschreibungssprache *Matlab*/*Simulink^{®}* realisieren. Zahlreiche Analyse- und Optimierungstools unterstützen die Messdatenauswertung und das anschließende Modelldesign und erlauben eine umfassende Validierung des Modells. Diese Analysephase des Funktionsdesigns wird als Model-in-the-Loop-Simulation (MIL) bezeichnet.

Ein Codegenerator wie z.B. *TargetLink©* setzt auf die grafische Funktionserstellung auf und erlaubt die automatische Seriencode Erzeugung "per Knopfdruck". Bei der anschließenden Software-in-the-Loop-Simulation (SIL) wird das Softwaredesign überprüft (Skalierung, Wortbreite, Quantisierungseffekte), die Processor-in-the-Loop-Simulation (PIL) liefert darüber hinaus Informationen über Laufzeit und Ressourcenbedarf auf der späteren Zielhardware.

Die Erfahrungen zeigen, dass ein frühzeitiger informativer Austausch mit den Fahrzeugherstellern über Funktionen und Einschränkungen notwendig ist. In Bezug auf die gewohnte Bedienphilosophie ist oftmals ein Umdenken erforderlich.

## Patentansprüche

1. Klimaanlage für ein Fahrzeug, insbesondere Kraftfahrzeug, mit
- einem Luftverteilungssystem, das einen Lufteinlass, ein Gebläse, eine Temperiervorrichtung, Luftverteilklappen und mehrere verschließbare Luftauslässe aufweist, und
- einer Regeleinrichtung für eine eingestellte Innenraumtemperatur, die eine Regelung für die Verteilung von Luftmassenströmen auf die einzelnen Luftauslässe entsprechend für die einzelnen Luftauslässe vorgebbarer Sollwerte aufweist.
**dadurch gekennzeichnet,**
- **dass** die Regelung auf Basis eines mathematischen Modells des Luftverteilungssystems erfolgendt.

2. Klimaanlage nach Anspruch 1, **dadurch gekennzeichnet, dass** ein fahrzeuggeschwindigkeitsabhängiger, über den Lufteinlass auf das Luftverteilungssystem wirkender Staudruck ermittelbar ist und dass in Abhängigkeit von der Größe des Staudrucks eine an das Gebläse anlegbare Betriebsspannung mit größer werdenden Staudruckwerten bis zu einem festlegbaren Minimalwert verringerbar ist.

3. Klimaanlage nach Anspruch 2, **dadurch gekennzeichnet, dass** nach Überschreiten eines Maximalstaudruckwerts die Luftverteilklappen und/oder die Luftauslässe derart schließbar sind, dass die vorgegebenen Sollwerte für die aus den Luftauslässe austretenden Luftmassenströme beibehaltbar sind.

4. Verfahren zur Einstellung der aus den Luftauslässen eines einen Lufteinlass aufweisenden Luftverteilungssystems ausströmenden Luftmassenströme in einer Fahrzeug-, insbesondere Kraftfahrzeug-Klimaanlage durch Regelung der Verteilung von Luftmassenströmen auf die einzelnen Luftauslässe entsprechend für die einzelnen Luftauslässe vorgebbarer Sollwerte auf Basis eines mathematischen Modells des Luftverteilungssysterns.

5. Verfahren nach Anspruch 4, **dadurch gekennzeichnet, dass** die Regelung auch unter Berücksichtigung eines fahrzeuggeschwindigkeitsabhängigen, über den Lufteinlass auf das Luftverteilungssystem wirkenden Staudrucks erfolgt.

## Claims

1. Air conditioning system for a vehicle, especially a motor vehicle, comprising
- an air distributing system having an air inlet, a blower, a temperature regulating device, air distributing flaps, and a plurality of closable air outlets, and
- a control means for an interior temperature set, which comprises a control for the distribution of air mass flows to the individual air outlets corresponding to target values predefinable for the individual air outlets,
**characterized in that**
- the control is effected based on a mathematical model of the air distributing system.

2. Air conditioning system of claim 1, **characterized in that** a dynamic pressure dependent on the vehicle speed can be determined, which acts on the air distributing system via the air inlet, and that, as a function of the level of the dynamic pressure, an operating voltage that can be applied to the blower can be reduced to a definable minimum value as the dynamic pressure values increase.

3. Air conditioning system of claim 2, **characterized in that** after a maximum dynamic pressure value is exceeded, the air distributing flaps and/or the air outlets an be closed such that the predefined target values for the air mass flows escaping from the air outlets can be maintained.

4. Method for adjusting the air mass flows in a air conditioning system of a vehicle, especially a motor vehicle, said air mass flows flowing from the air outlets of an air distributing system having an air inlet, by controlling the distribution of air mass flows to the individual air outlets according to target values predefinable for the individual air outlets based on a mathematical model of the air distributing system.

5. Method of claim 4, **characterized in that** the control is also performed with consideration to a dynamic pressure dependent on the vehicle speed, which acts on the air distributing system via the air inlet.

## Revendications

1. Climatiseur d'un véhicule, notamment un véhicule motorisé, comprenant
- un système distributeur d'air comprenant une entrée d'air, un ventilateur, un dispositif d'équilibrage de température, des clapets de distribution d'air et plusieurs sorties d'air fermables, et
- un moyen de commande d'une température de l'intérieure réglée, le moyen comprenant une commande de la distribution de débits masse d'air aux sorties d'air individuelles conformément à des consignes prédéfinissables pour les sorties d'air individuelles,
**caractérisé en ce que**
- la commande est effectuée à base d'un modèle mathématique du système distributeur d'air.

2. Climatiseur selon la revendication 1, **caractérisé en ce que** l'on peut déterminer une pression dynamique fonction de la vitesse du véhicule agissant sur le système distributeur d'air par l'entrée d'air, et que, en fonction du niveau de la pression dynamique, une voltage d'opération à appliquer au ventilateur est reduisable jusqu'à une valeur minimale au fur et à mesure de la croissance des valeurs de la pression dynamique.

3. Climatiseur selon la revendication 2, **caractérisé en ce qu'**après une valeur maximale de la pression dynamique fût surpassée, les clapets de distribution d'air et/ou les sorties d'air sont fermables de sorte que les consignes prédéfinies pour les débits masse d'air sortant des sorties d'air peuvent être maintenues.

4. Procédé pour l'ajustage des dédits masse d'air sortant des sorties d'air d'un système distributeur d'air comprenant une entrée d'air dans un climatiseur d'un véhicule, notamment un véhicule motorisé, l'ajustage étant effectué en commandant la distribution de débits masse d'air aux sorties d'air individuelles conformément à des consignes prédefinissables pour les sorties d'air individuelles à base d'un modèle mathématique.

5. Procédé selon la revendication 4, **caractérisé en ce que** la commande est effectuée également en considération d'une pression dynamique fonction de la vitesse du véhicule agissant sur le système distributeur d'air par l'entrée d'air.
